# EUROPEAN PATENT SPECIFICATION

(11) **EP 1 733 278 B1**
(45) Date of publication and mention of the grant of the patent: **03.10.2007**
(21) Application number: 05718551.4
(22) Date of filing: 24.03.2005
(51) Int. Cl.: G02F 1/13, D03D 15/00, D02G 3/34, G02F 1/01, G02F 1/1334

(54) **METHOD OF PRODUCING A FIBRE WITH LATERAL ELECTRIC FIELDS**
VERFAHREN ZUR HERSTELLUNG EINER FASER MIT SEITLICHEN ELEKTRISCHEN FELDERN
PROCEDE DE PRODUCTION D'UNE FIBRE A CHAMPS ELECTRIQUES LATERAUX

(30) Priority: 30.03.2004 GB 0407228
(43) Date of publication of application: 20.12.2006
(73) Proprietor: Koninklijke Philips Electronics N.V., 5621 BA Eindhoven (NL)
(72) Inventor: WILDERBEEK, Johannes.T.,A, Redhill Surrey RH1 5HA (GB); BURDINSKI, Dirk, Redhill Surrey RH1 5HA (GB); DEN TOONDER, Jacob.M.,J., Redhill Surrey RH1 5HA (GB); KRANS, Jan, M., Redhill Surrey RH1 5HA (GB); VAN BRUGGEN, Michel, P., B., Redhill Surrey RH1 5HA (GB)
(74) Representative: Damen, Daniel Martijn
(86) International application number: PCT/IB2005/051011
(87) International publication number: WO 2005/096078

(56) References cited:
- EP-A- 1 207 140
- GB-A- 1 409 206
- US-A- 5 906 004
- US-A- 6 096 666
- US-A1- 2004 009 729

## Description

This invention relates to the manufacture of a fibre or filament, especially one that is suitable for inclusion in a fabric or garment with the aim of producing optically detectable effects therein.

Various methods of producing colour changing, or light emitting fibres are known.

One known method is based on perforating the outer surface of an optical fibre so that light "leaks" through the perforations when light is fed into one end of the fibre.

Other known methods are based on sandwiching layers of electroluminophor material between at least two electrode layers in a fibre, the material emitting light under the influence of an electric field generated in the space between the electrode layers. Such a method is described in UK patent application No. GB 2 273 606 and International patent application No. WO 97/15939.

Another known method is disclosed in US 6096666 which forms the basis of the preamble of claims 1 and 16.

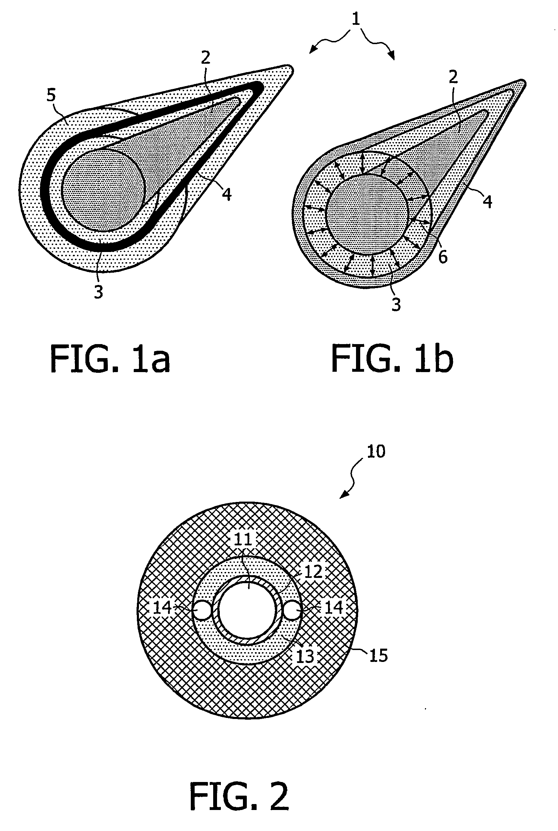

A typical example of an existing fibre is shown in figure 1a. The fibre 1 consists of a cylindrical conductive core 2, surrounded by successive outer layers 3 to 5. The core is made from metal wire e.g. copper wire, and functions as an inner electrode or heating element. The electro-optic substance 3 forms a layer around the core 2 and is sandwiched between the core 2 and an outer electrode layer 4. As shown in figure 1a, the fibre may optionally include an outer sheath 5, which is at least partially transparent to light.

A problem with existing fibre arrangements is that the outer electrode layer 4 is typically formed by thin layer deposition processes, the success of which is largely dependent on the mechanical properties of the supporting electro-optic substance 3. Therefore, the need to include an outer electrode layer 4 limits the number of possible substance combinations suitable for use in the fibre. For instance, the deposition of a outer electrode layer 4 covering a liquid or gel type electro-optic substance layer is extremely difficult to fabricate in practice.

The optical characteristics of the electro-optic substance are generally altered by an external stimulus, such as heat, current or an electric field. As a consequence of existing fibre electrode layering, electric fields 6 in the fibre have a radial topology i.e. the field lines pass between the electrode layers 2, 4 perpendicularly to the core 2 of the fibre 1. This is shown in figure 1 b, where the electric field lines 6 can be seen to be passing through the electro-optic substance layer 3 in radial directions relative to the core 2.

Another problem with known fibres is that a radial electric field topology within the fibres places a limitation on the number of electro-optic switching principles that are possible within the electro-optic substance. This in turn governs the changes in optical effects achievable within a particular fibre. Existing fibres must therefore be manufactured with increasingly more sophisticated electrode layers in order to increase the number of possible switching principles.

The present invention relates particularly to the field of manufacturing wearable electronics. This field aims at integrating specific functions such as sensing, actuating, light emitting, and colour changing into garments. It is particularly desirable to be able to integrate colour changing properties into textiles for the formation of garments, furnishings etc. Such technology could be used to make wearable displays, wearable indicators, and also to simply cause a change of colour or pattern to textiles for aesthetic reasons.

It is known to produce a wearable display by interweaving conductive fibres and fibres containing electro-optic substances. A problem with such displays is that the light emitting effect is not integrated into a single fibre. This means that the effect is not uniform across the garment or other work formed from the fibres. In addition it is necessary to use either two sets of interwoven fibres containing conductive elements, or additional conductive layers deposited on the woven structure.

It is an object of the present invention to provide a method of manufacture of a fibre or filament in which the optically changing function is integrated into the single fibre or filament, and wherein the change in fibre or filament appearance can be actively controlled.

It is another object of the present invention to provide a method of manufacture of a fibre or filament in which the change in fibre or filament appearance can be actively controlled by a single electrode layer.

It is further object of the present invention to provide a method of manufacture of a fibre or filament having a non-radial electric field topology in the fibre or filament.

It is a further object of the present invention to create a fabric from a fibre or filament manufactured according to the present invention which fabric may be used to form, for example, garments or furniture.

Some or all of these objects may be achieved by embodiments of the invention as described herein.

According to an aspect of the present invention there is provided a method of producing a fibre or filament as defined in claim 1.

According to a further aspect of the present invention there is provided a method of producing a fibre or filament as defined in claim 16.

Embodiments of the present invention will now be described by way of example and with reference to the accompanying drawings in which:
Figures 1a and 1b are perspective cross-sectional representations of fibres known in the prior art.
Figure 2 is a schematic cross-sectional representation of a first embodiment of a fibre manufactured according to the present invention.
Figures 3a and 3b are perspective cross-sectional representations of a fibre illustrating two different electrode layouts structured according to preferred embodiments of the present invention.
Figures 3c and 3d are perspective cross-sectional representations of a fibre illustrating an electric field topology according to a preferred embodiment of the present invention.
Figures 4a and 4b are schematic representations illustrating two different electrode layouts structured according to preferred embodiments of the present invention.
Figures 5a, 5b and 5c are schematic representations illustrating three different electrode layouts structured according to preferred embodiments of the present invention.
Figure 6 is a schematic representation of a further electrode layout structured according to a preferred embodiment of the present invention.
Figures 7a and 7b are schematic cross-sectional representations of a second and a third embodiment of a fibre manufactured according to the present invention.

Figure 8 is a schematic representation of a (+)mCP parallel printing technique for structuring electrode layouts according to preferred embodiments of the present invention.

Figure 9 is a sequence of photographs showing enlarged views of an electrode layout according to a preferred embodiment of the present invention.

Referring first to figure 2, a fibre manufactured according to the present invention is designated generally by the reference numeral 10. The fibre 10 comprises a substrate 11 in the form of an elongate core, the core having a core axis. In preferred embodiments, the substrate 11 is formed from a conventional flexible polymer fibre, which is substantially cylindrical in shape and is preferably made from an electrically insulating material. Examples of suitable polymer fibres include, but are not limited to, polyesters, polyamides, polyacrylics, polypropylenes, vinyl-based polymers, wool, silk, flax, hemp, linen, jute, rayon-based fibres, cellulose acetate-based fibres and cotton.

An advantage of using conventional polymer fibres is that they are readily available and have mechanical properties which can be adapted to suit the particular fibre requirement e.g. in terms of strength and flexibility. This is to be contrasted with conductive metal wires which have only a limited range of mechanical properties. Using a core material with a wider range of possible mechanical properties is advantageous, since it allows some electro-optic substances, and combinations thereof, not previously considered suitable to be used in the manufacture of the fibre 10.

In preferred embodiments, the substrate 11 may be coated directly (i.e. to an outer surface of the substrate) with a barrier layer (not shown) so as to protect the material of the substrate 11 during subsequent steps of the fibre manufacturing method. In particular, the barrier layer may be selected to be preferably resistant to chemical etchants. Hereinafter, references to 'substrate' or 'core' are to be taken to include those coated with or without a barrier layer.

The substrate 11 of fibre 10 is treated by coating the substrate 11 with an electro-optic substance 13, which is selected so as to preferably have at least one electrically modulatable optical characteristic. The substrate 11 may either preferably be coated directly, or indirectly, with the electro-optic substance 13.

The substance 13 is responsive to an applied electric field and in order to actively control the optical characteristic of the substance 13, an electrical stimulation means 12 is incorporated into the fibre 10 during the manufacturing method. The electrical stimulation means 12 is adapted to exert an electric field on the substance 13 to induce an optically detectable effect. The stimulation means 12 may be associated with the substrate 11 and/or the substance 13, but in all embodiments is configured to exert an electric field on an adjacent portion of an electro-optic substance 13.

In preferred embodiments, the stimulation means 12 is arranged into one or more elongate stimulation layers extending in a direction substantially parallel to the core axis, the stimulation layers being substantially coaxial with the core and spaced at various radii from the core axis. Preferably, the stimulation means 12 may be further arranged to include one or more substance layers, each including the electro-optic substance 13. Each substance layer extending in a direction substantially parallel to the core axis, the substance layers being substantially coaxial with the core and each associated with at least one stimulation layer.

In preferred embodiments, the fibre 10 may be arranged so that a stimulation layer and a substance layer are made to surround at least a portion of the core. Most preferably, a stimulation layer 12 is sandwiched between the core and a substance layer 13.

In other preferred embodiments, the substance layer 13 may be sandwiched between the core and a stimulation layer 12 which is adapted to be at least partially transparent to light.

It is to be appreciated that although the preferred embodiments are directed to the manufacture of a fibre 10 having a substantially cylindrical shape, this is not intended to be limiting, and the fibre 10 of the present invention may be manufactured so as to include other geometrical cross-sections and configurations. In particular, the fibre 10 of the present invention may also be in the form of a flat or ribbon-type fibre.

Hence, any references herein to "fibre", "filament", "layer" or "core" should not be taken to be limited to cylindrical geometries. Moreover, a "core" of a flat or ribbon-type fibre may be taken to include a base layer.

In preferred embodiments, the electro-optic substance 13 may consist primarily of conventional low molecular weight liquid crystal material, and combinations of low molecular weight liquid crystals and polymers. These polymers may consist of flexible polymers, side-chain liquid crystal polymers, main-chain liquid crystalline polymers, isotropic or anisotropic networks, dispersed polymer particles, and combinations thereof. Alternatively, the electro-optic substance 13 may consist primarily of optionally coloured spherical or cylindrically shaped particles. The particles may optionally carry a charge and may be suspended in a carrier such as a liquid. Furthermore, each particle may comprise additional sub-particles, such as coloured polymer microcapsules, optionally suspended in a second carrier. In another example, coloured particles, e.g. colourants or pigments, may be used that are dispersed in an aqueous solution and that demonstrate a colour change upon reversible volume phase transitions in response to external stimuli (see for example, 'Polymer gel light-modulation materials imitating pigment cells', Akashi, R. et al., Adv. Mater., 14 (24), 2002, pg 1808).

In yet another alternative, the electro-optic substance 13 may be any known inorganic or organic electro-luminescent material or non-electro-luminescent carrier material containing electro-luminescent material. Non-limitative examples of such a material include phosphors and phosphor containing layers. In particular, examples of phosphors are large band gap semiconductors, such as II-VI compounds, rare earth oxides and oxysulfides, and insulators. Preferably, II-VI materials can be used, such as ZnS, SrS, doped with for instance, but not limited to, Mn, Cu, Eu, or Ce, and their respective derivatives. Another alternative is the use of organic (e.g. small molecule organic light emitting diode materials or oligomeric or polymeric organic light emitting diode materials) or inorganic light emitting diode materials.

The deposition of the substance 13 into layers may be accomplished using commonly known techniques, such as, but not limited to, dip coating, spray coating, vapour deposition and sputtering.

In other preferred embodiments, the fibre 10 may further be coated with an outer sheath 15 to protect the electro-optic substance 13 and to provide at least additional stability and support to the fibre 10. Preferably the outer sheath 15 is formed from a non-conductive material and is adapted to be at least partially transparent to light. Conveniently, the outer sheath 15 is formed from a flexible polymer.

Referring again to figure 2, spacer means 14 may be preferably added to the fibre 10 to maintain the fibre 10 in a predetermined shape. Depending on the nature of the electro-optic substance 13, it can be advantageous to include spacers 14 in the fibre or filament 10, particularly if the substance 13 has a liquid or gel-like form and therefore will not have a self maintaining shape.

The spacer means 14 are preferably formed from a non-conductive material, such as glass or polystyrene, and may be in the form of, for example, elongate wires, substantially circumferential wire rings, or substantially spherical beads.

In preferred embodiments, each stimulation layer comprises an electrode layer. The electrode layer is a layer of conductive material and can be inorganic or organic in nature. Examples include, but are not limited to, metal layers, such as indium tin oxide, gold, silver, platinum, copper, and their derivatives, and conductive or semi-conductive oligomers or polymers, such as polyaniline derivatives and thiophene derivatives e.g. PEDT or PEDOT. Optionally, these oligomers or polymers may contain additives to optimise the electrical and thermal conductivity, and enhance the lifetime. The stimulation layer may preferably further include a promotion adhesion layer (not shown) which is particularly useful to promote adhesion of metallic electrode layers. The adhesion layer may be a metal and is preferably titanium or chromium.

The electrode and adhesion layers are preferably deposited using commonly known techniques, such as, but not limited to, sputtering, vapour deposition, electroless deposition, or using self assembly processes of self assembled monolayers. The adhesion layer thickness is preferably in the range of 1 to 5 nm, and is most preferably 2 nm. The electrode layer thickness is preferably in the range of 10 to 400 nm, and is most preferably 20 nm for inorganic layers and 200 nm for organic layers.

In preferred embodiments, the electrode layer is deposited directly onto an outer surface of the substrate 11, or alternatively is deposited on top of an adhesion layer which has been previously deposited onto the outer surface of the substrate 11.

In other preferred embodiments, the electrode layer may be deposited directly onto an outer surface of a substance layer.

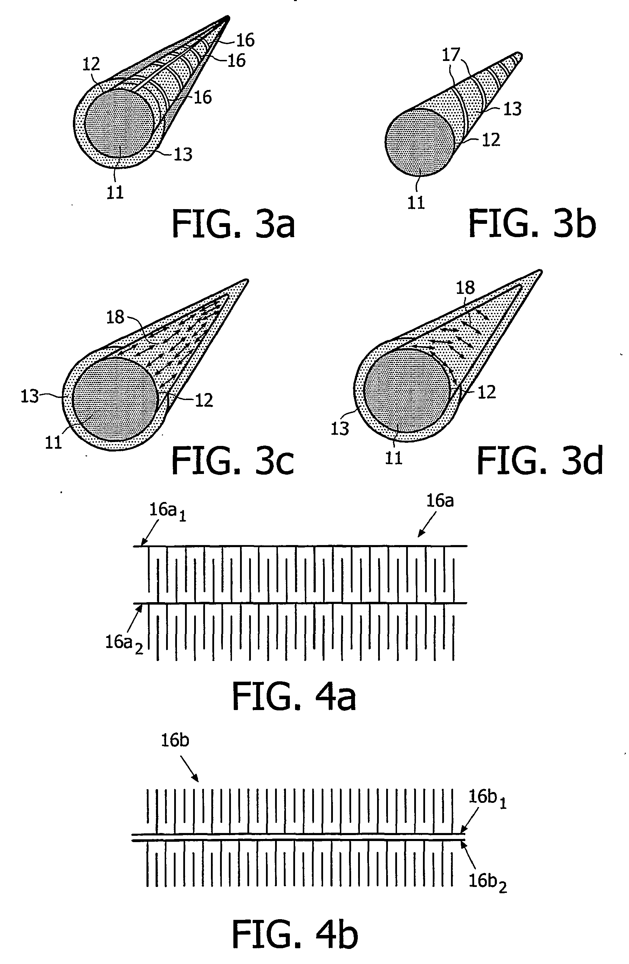

The electrode layer is preferably structured into an array of electrodes 16, 17 comprising a plurality of electrode pairs, as shown in figures 3a and 3b. The electrodes are arranged so as to generate a lateral electric field 18 in either a direction substantially parallel to the axis of the core, as shown in figure 3c, or in a direction extending substantially circumferentially about the core axis, as shown in figure 3d. In some arrangements, one or more electrode arrays may be arranged so as to generate electric fields which extend both substantially along the direction of the core axis and substantially circumferentially about the core axis. This is in contrast to the conventional radial, or perpendicular, electric fields used within existing fibres (cf. figure 1b). The lateral electric field 18 is substantially confined to the plane of the electrodes i.e. a surface field, which in the case of cylindrical geometries would be confined to a cylindrical surface. The local effective field strength depends on the applied voltage, the type and microstructure of substance 13 used in the fibre, and on the distance from the electrodes 16, 17. Typically, macroscopic field strengths are required in the range 0 - 50 V mm-1, but typically 0.5 - 5 V mm-1, for low molecular weight liquid crystal containing substance layers. The macroscopic field strength increases upon increasing content of higher molecular weight liquid crystals, such as liquid crystal polymers. In the case of electroluminescent materials the macroscopic field strength may be significantly higher, in the range 0 - 500 V mm-1, but typically 10 - 250 V mm-1.

References herein to "lateral electric field", "lateral field" or "surface field" are to be taken to include any electric field having directions substantially parallel to the axis of the fibre core or having directions substantially circumferential about the core axis, irrespective of the magnitude of the field or any gradients in the field.

Further, in the case of flat or ribbon type fibre geometries (not shown), the plurality of electrode pairs in the electrode array is arranged so as to generate a lateral electric field either in a direction substantially parallel to the axis of the core 11, or in a direction substantially transverse to the core axis, wherein the electrode pairs are disposed in the same off-axis plane. The transverse field is therefore substantially constrained to the off-axis plane and has no radial field component passing through the core axis. Hence, references herein to "lateral electric field", "lateral field" or "surface field" are also to be taken to include transverse surface electric fields in flat or ribbon type fibre geometries.

Lateral fields 18 within the fibre 10 are advantageous, since they allow some electro-optic substances 13, and combinations thereof, hitherto previously considered unsuitable, to be used in the fibre 10. The electric field direction in the fibre 10 manufactured according to the present invention enables electro-optic substances 13 in the fibre 10 to be electrically stimulated in a non-radial direction (relative to the core). This can be particularly advantageous for some liquid crystal materials and their switching principles and electroluminophors. In particular, liquid crystal switching principles that use a so-called in-plane switching principle benefit from this design, see for example 'Principles and characteristics of electro-optical behaviour with in-plane switching mode', Oh-e, M. et al Proc. of the 15th International Display Research, Japan, 1995, pg 577) and 'Singe-substrate liquid-crystal displays by photo-enforced stratification', Penterman et al., Nature, 417, 2002, pg 55).

For an electrode array covered with a layer of electro-optic substance, the electric field will be constrained to the plane of the array, and the local effective field strength will depend on the applied voltage, the type and microstructure of substance 13 used in the fibre, and on the distance from the electrodes 16, 17. Generally, the entire volume of substance can be switched, as has been successfully demonstrated in for instance in-plane switching liquid crystal displays, where liquid crystal layers with a layer thickness of 0-30 mm are switched (see for example 'Principles and characteristics of electro-optical behaviour with in-plane switching mode', Oh-e, M. et al Proc. of the 15th International Display Research, Japan, 1995, pg 577, and '18.0-in.-Diagonal super-TFTs with fast response speed of 25 msec', Ohta, M. et al., Digest of Technical Papers, SID International Symposium, San Jose (USA), 1999, XXX, pg 86).

Moreover, the lateral fields 18 also allow previously unsuitable switching principles to be used with the electro-optic substance 13 of the fibre 10, thus leading to potentially new aesthetic and creative effects in the visual appearance of the fibre 10.

Further, in conventional switching principles, the exact definition of the electrode distance, or cell gap, is of particular importance as the cell gap sometimes needs to be tuned with an accuracy of 0.1 mm for an optimal modulation of the light. By using lateral electric fields 18 within the fibre 10, the electrodes 16, 17 need only be arranged in a single substantially thin layer (i.e. an electrode layer) and so it is no longer necessary to manufacture the fibre to have an inner (core) electrode and an outer electrode layer held in spaced relation. This means an outer electrode layer is not required, and a wider choice of electro-optic substance may be made for use in the fibre 10.

The stimulation means 12 enables the optical characteristics of the electro-optic substance 13 to be controlled via a single electrode layer only and allows the optically changing function to be fully integrated into the fibre 10 during manufacture, with more lenient specifications towards the distance between the electrodes than usually required for conventional switching principles.

Electrode arrays 16, 18 can be structured using self assembly methods, deposition techniques, lithographic methods, X-ray lithography, particle beam methods and non-lithographic methods. Both inorganic and organic based electrode materials may comprise materials in the form of nanorods, nanotubes, nanowires or flakes, or the materials may be mixtures incorporated in an inorganic, organic, or hybrid matrix, either by dissolution, blending, complexation, adsorption to a binder, vapour deposition, sonification, dispersion or can be generated in-situ by an external stimulus such as UV-irradiation.

In one preferred embodiment, the electrode array 16, 17 is structured by a lithographic technique, which directly covers the substrate 11 with an adhesion layer, preferably 2 nm thick titanium, and then overlays it with an electrode layer, preferably 20 nm thick gold. The fibre is preferably dip coated with a photoresistive substance, such as, but not limited to, a diazonaphtoquinone (DNQ)-based photoresist dispersed in a phenolic-matrix resin. It is to be understood that any suitable photoresistive substance may be used. The outer surface of the coated fibre is then covered with a separate illumination mask, the mask defining the pattern of the electrode array. The masked fibre is irradiated with, preferably, UV-radiation and is submersed in a developing solution, such as an aqueous tetramethylammonium hydroxide solution. The unmasked sections of the fibre which were irradiated, are subsequently removed by a chemical etchant to leave the desired electrode array configuration on the outer surface of the substrate 11. The example given here is that of a positive resist, where the illuminated areas are subsequently removed by a suitable solvent. Negative resists, where the non-illuminated area is subsequently removed can in principle also be used.

In another preferred embodiment, the electrode array is structured by a soft-lithographic technique based on micro-contact printing (mCP). As described in the previous embodiment, the substrate 11 is coated with an adhesion layer, preferably 2 nm thick titanium, which is then overlaid with an electrode layer, preferably 20 nm thick gold. A flexible stamp, with a surface relief pattern corresponding to the pattern of the electrode array, is preferably inked with a solution of an alkanethiol (e.g. hexa- or octa- decanethiol in ethanol, or other suitable ink molecules) and is brought into conformal contact with an outer surface of the gold layer. A self-assembled monolayer (SAM) of the ink molecules is formed on the outer surface in the contacted areas only and thereby serves to act as a etchant resist. When the fibre is immersed in a chemical etchant, the unprotected gold sections are selectively removed. A second chemical etchant can be preferably applied to remove the exposed sections of the titanium adhesion layer underneath. This is an example of negative microcontact printing (-)mCP.

Alternatively, the above embodiment can be modified to be a positive microcontact printing (+)mCP technique, by the application of a second (SAM) monolayer, preferably from solution or the gas phase, or by applying a second stamp. The molecules of the second monolayer are preferably selected to have a higher stability than the first monolayer against the chemical etchant, and consequently during the etching process the sections of gold inked by the first monolayer are removed. This creates a positive electrode array pattern (with respect to the original stamp) on the outer surface of the substrate 11. Depending on the filling ratio (i.e. the surface ratio of contacted to non-contacted areas) of the electrode array pattern, this second method of positive mCP may be preferred over the negative method of mCP, in order to avoid problems such as squeezing or collapse of the stamp under the low applied pressure.

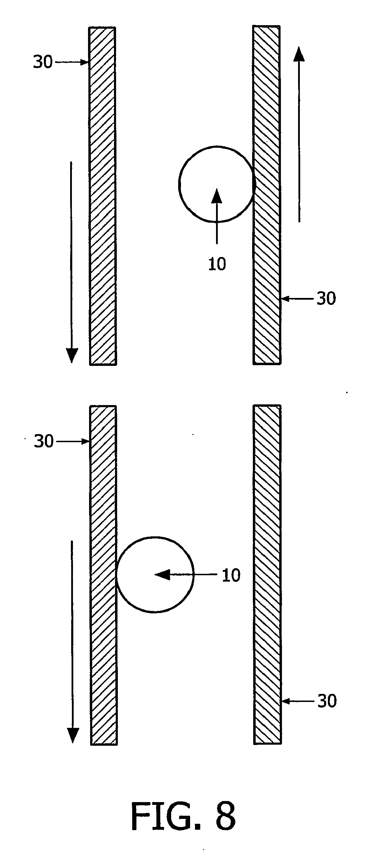

In the two previous embodiments, the flexible stamp may preferably be held at rest relative to the fibre, and the fibre itself may be moved into contact with the stamp, to initiate the inking of the outer surface of the electrode layer. Also, the electrode layer may preferably be rolled across the surface of the patterned stamp, which is particularly advantageous for cylindrically shaped fibres. With respect to the (+)mCP method, application of the first and second SAM may be done in one process step with two parallel stamps 30 inked moving in preferably opposite directions, each stamp inked with one of the two ink molecules, and the stamps being brought sequentially into contact with the fibre as shown in figure 8. Parallel processing, in which different fibres may be rolled in parallel over different areas of a single large stamp, will be possible with this approach and instead of patterning individual fibres sequentially it will be possible to continuously process batches of fibres.

It is to be appreciated that other micro-contact printing methods may be used to structure the electrode array of the fibre or filament as manufactured according to the present invention.

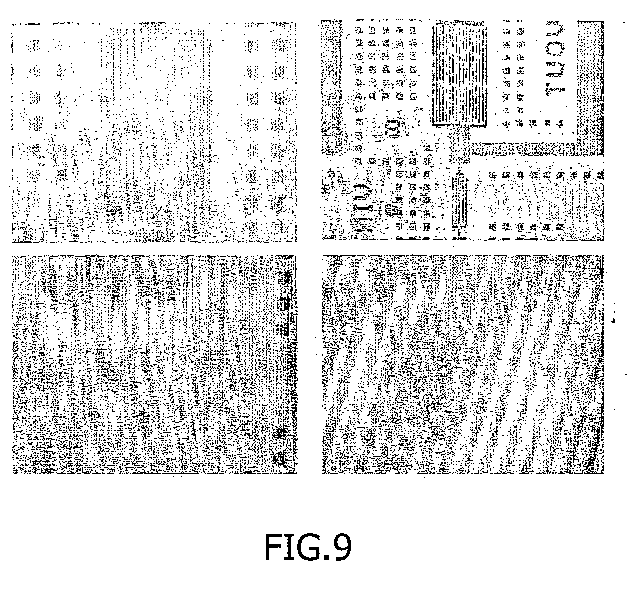

An example of an electrode array structured using a soft-lithographic technique such as microcontact printing is shown in figure 9. Each part of the figure shows the electrode array at a different magnification and included for scale are squares of dimension 10 mm x 10 mm. In the example shown in figure 9, a polyester substrate was covered with a 2 nm titanium promotion adhesion layer and a 20 nm gold electrode layer, using vapour deposition at a pressure of 3 x 10-7 mbar. The pattern of the electrode array was transferred to an outer surface of the gold using a thiol ink, and in a subsequent etching step the gold was removed to leave the electrode array as shown.

Following removal of the titanium layer with a second etchant, the electrode array could be covered with an electro-optic substance to produce a fibre 10 according to the present invention.

In another preferred embodiment, the electrode array is structured using a further soft-lithographic technique called microtransfer patterning (mTP). This technique inks a patterned stamp with a ink solution that contains a metal precursor held in suspension. The metal precursor is preferably in the form of metal micro- or nano- particles or metal clusters. The elevated regions of the stamp will be covered with the ink and upon direct contact with the outer surface of the substrate 11, the ink will be transferred from those inked regions to the substrate 11. The inked substrate is then thermally treated to convert the precursor into metal electrodes arranged in the pattern of the electrode array. Conversion temperatures are typically some 100°C. If thermally sensitive fibre cores are used, fully pre-patterned electrode arrays may be applied in the mTP process with a flexible stamp bearing a thin metal layer only on the elevated regions of the surface relief pattern. The stamp is initially brought into contact with the metal layer, which is supported by a substantially flat surface. The stamp material and support surface material are pre-selected such that the adhesion of the metal to the stamp overcomes the adhesion of the metal to the support surface, so that the metal selectively adheres only to the elevated regions. The prepared stamp is then applied to an outer surface of the substrate to produce the electrodes in the pattern of the electrode array.

Referring to figures 3a and 3b again, there is illustrated two preferred example arrangements of electrode arrays 16, 17 for use in the fibre 10 manufactured according to the present invention. In figure 3a the electrode array 16 has two sets (shown as black and white respectively) of conductive electrode fingers arranged in engaging alternate adjacent sequence i.e. a plurality of electrode pairs. The array 16 is circumferentially and longitudinally arranged around the core 11 of the fibre 10. In an alternative arrangement in figure 3b, the two sets of electrode fingers are entwined (although electrically isolated from each other) and are arranged helically along the direction of the core axis.

In figures 4a and 4b there is illustrated two preferred arrangements of electrode arrays 16a, 16b. For clarity these are shown in 2-dimensions as a 'flat' schematic representation and it is to be appreciated that these could be wrapped around a cylindrical or other geometrical surface as required. In the preferred arrangement in figure 4a, the electrode fingers of the two sets of electrodes 16a1, 16a2 have a lateral dimension of typically 5-20 mm, are equally spaced, by typically 5-50 mm nm, and of equal length, typically almost equal to the fibre diameter, typically 20 mm to several mm, with the central 'spines' of the electrodes being spaced from each other by at least the length of the fingers. In the alternative arrangement in figure 4b, corresponding to the electrode array 16 as shown in figure 3a, the spines of the electrodes 16b1 and 16b2 are preferably arranged so as to be back-to-back. Principally, the minimal dimension of any electrode is only determined by the processing method, e.g. lithography, and in this way it is also feasible to produce electrodes with a lateral dimension of for instance 50nm, but in practice electrodes with dimensions as shown above are preferred as the processing is substantially easier and more cost-effective.

It is to be understood that the example electrode arrangements 16a, 16b shown are not limiting and other suitable configurations which generate lateral electric fields may be used in the fibre manufactured according to the present invention.

Preferably, the electrodes 16, 17 are of a form known as interdigitated electrodes, which are known to be used in some flat 2-dimensional liquid crystal displays for improving viewing angle (see for example, 'Principles and characteristics of electro-optical behaviour with in-plane switching mode', Ohe, M. et al Proc. of the 15th International Display Research, Japan, 1995, pg 577).

In preferred embodiments, the electrode array 16, 17 may cover substantially all of the outer surface of the substrate 11 or just part of the surface. Referring again to figures 3c and 3d, the lateral electric field 18 is substantially confined to the electrode layer, which in the preferred embodiment would correspond to a surface field substantially covering the outer surface of the core. The surface field having essentially no radial field components.

In preferred embodiments, the electrode layer may optionally be covered by an overlying coating (not shown). The primary function of the coating is preferably to protect the electrodes, since these are by nature very fine and delicate. However, the coating may also perform a secondary function which includes, but is not limited to, a spacing layer, an adhesion layer, a barrier layer, a sealing or covering layer, a UV shielding layer, a polarising layer, a brightness enhancing or perception improvement layer, a colouration layer, a conductive or semi-conductive layer, a channelling layer, an additional electrode layer, a dielectric layer or any combinations thereof.

The lateral electric field 18 generated by the array of electrodes 16, 17 exerts an electrical influence on the portion of electro-optic substance 13 in the vicinity of the electrodes. The portion of the substance defines a switchable volume in the electro-optic substance 13 which corresponds to a switchable area on the outer surface of the substance 13. Hence, by selecting arrays 16, 17 of different sizes, part or all of the fibre 10 may be switched to produce detectable optical effects in the fibre appearance.

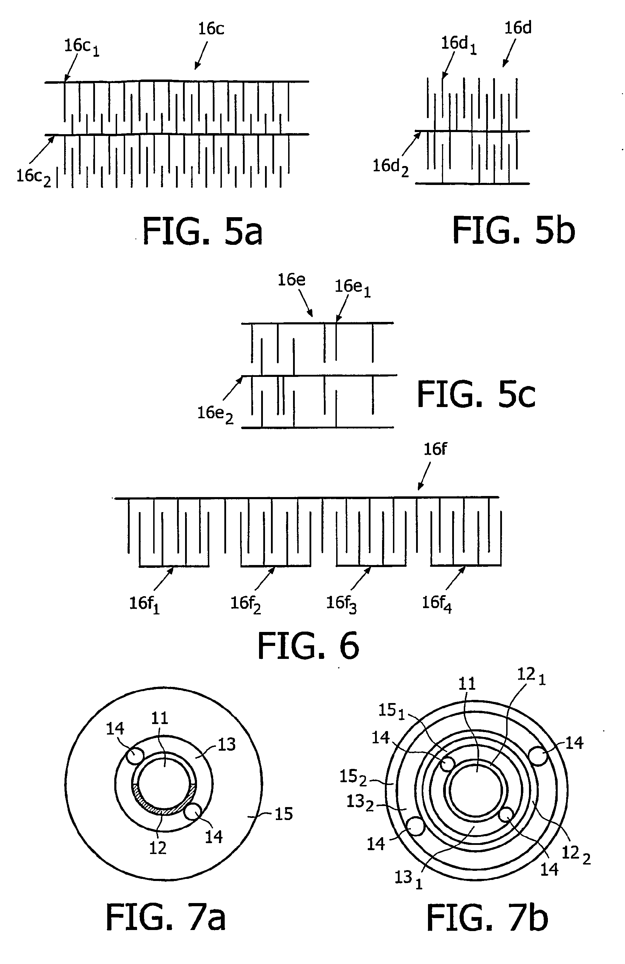

Patterned switching effects may be produced in the fibre 10 by the preferred arrangements of electrode arrays 16c, 16d and 16e as shown in figures 5a, 5b and 5c. In figure 5a, the electrodes are structured so as to have different lengths along the array 16c. Preferably, the differences in length may be selected to be randomly distributed, or else are cyclically repeated throughout the array 16c. By structuring the electrodes to have different lengths, it is possible to produce variations in the lateral electric field 18 within the array 16c, which produces variable switching effects in the portion of the substance in the vicinity of the electrodes.

More complex patterned switching effects may be achieved by structuring the electrodes so as to have different sequences of electrodes and/or different spacings therebetween. In figure 5b, there is shown a preferred arrangement in which one or more electrodes are omitted from the pattern of electrodes. By omitting electrodes, discontinuities in the lateral electric field 18 are generated along the array 16d, which render the corresponding portions of the electro-optic substance 13 unswitchable at the locations of the discontinuities. Hence, by selecting which electrodes to omit during structuring of the electrodes, variable optical effects may be produced in the visual appearance of the fibre 10.

If the spacings between adjacent electrode fingers are structured differently as shown in figure 5c, an intensity gradient switching effect may be produced along the array 16e. In this way, it is possible to produce greyscale and optical graduation effects in the electro-optic substance 13 either along a direction parallel to the core axis or circumferentially about the core axis, or both. Fibres 10 manufactured with the ability to exhibit intensity gradients are of considerable interest to the textile industry, especially to fashion designers seeking to incorporate electro-optic fibres into textile designs.

In a further preferred arrangement of electrodes, as shown in figure 6, the electrodes are structured into segmented groups 16f1...16f4. An advantage of this arrangement is that the groups 16f1...16f4 can be individually addressed and switched, thereby allowing greater control over the patterned switching in the fibre 10. Individual addressing of electrode groups 16f1...16f4 provides further opportunities to produce interesting and aesthetically appealing optical effects. It should be noted, however, that although the example illustrates four groups 16f1...16f4 each of four electrode fingers, this is not limiting and it is to be understood that other arrangements of segmented electrodes are possible.

Referring to figure 7a, there is illustrated another preferred embodiment according to the present invention. In this example the electrode layer is structured so as to comprise a plurality of separate electrode arrays, each array covering a respective part of the outer surface of the substrate 11. The respective parts may be substantially equal in area, or else are different in size. Preferably either some or substantially all of the outer surface of the substrate 11 may be covered by the plurality of electrode arrays.

Alternatively, the plurality of separate electrode arrays may reside on top of the electro-optic substance 13, with the substance 13 substantially surrounding the core of the fibre 10.

The plurality of electrode arrays are structured to be electrically isolated from each other, and each is preferably able to switch a corresponding portion of the electro-optic substance 13. Preferably the plurality of electrode arrays may be switched independently, or else in conjunction with one or more others.

Preferably the plurality of electrode arrays are arrays of interdigitated electrodes.

In the embodiment shown in figure 7a, an outer sheath 15 may further be added to the fibre to protect the electro-optic substance 13 and to provide additional stability and support in the fibre 10. Preferably the outer sheath 15 is formed from a non-conductive material and is at least partially transparent to light. Conveniently, the outer sheath 15 is formed from a flexible polymer. The outer sheath can be added by dip coating the fibre in a suitable flexible polymeric material for example.

Referring again to figure 7a, spacer wires 14 may be added to the fibre. The spacer wires 14 ensure the existence of a well-defined thickness to the layer of electro-optic substance 13. This may be necessary since the substance 13 has liquid or gel-like properties and therefore has no fixed shape. The spacer wires are preferably entwined around the core 11 (overlying the plurality of electrode arrays), and have a wire diameter of approximately 20-200µm. Alternatively, the spacer wires may be in the form of separate substantially circumferential wire rings disposed either randomly, or at predetermined intervals, along the length of the core. The spacer wires 14 are preferably formed from a non-conducting material to prevent short-circuiting of the electrode arrays.

Alternatively, the spacers 14 are in the form of substantially spherical spacer beads positioned in the electro-optic substance 13. The diameter of each of the beads 14 is substantially equal to the desired thickness of the substance 13, which in this example is around 5-50µm. The spacing beads 14 are preferably formed from a non-conducting material to prevent short-circuiting of the electrode arrays. The beads may either be incorporated within the substance 13, or may be deposited directly onto the outer surface of the core 11 along with the plurality of electrode arrays.

Referring to figure 7b, there is illustrated a further preferred embodiment according to the present invention. In this example, the fibre 10 is arranged so as to include two substance layers 131, 132 and two stimulation layers 121, 122 at different depths within the fibre 10. All of which overlie a non-conductive core 11.

Preferably one or more electrode arrays are structured in an electrode layer which is in contact with the outer surface of the core 11. The electrode layer is then overlaid with a first electro-optic substance. The electrode layer in contact with the core 11 controls the switching of the substance in the first substance layer 131. Added to the fibre 10 is a central sheath 151 to provide structural support and stability in the fibre 10. The central sheath 151 is preferably formed from non-conductive material and is, at least partially, transparent to light. Conveniently, the central sheath 151 is formed from a flexible polymer.

The outer surface of the central sheath 151 preferably acts as a substrate for one or more further electrode arrays which are then overlaid with a second electro-optic substance. The electrode arrays in contact with the central sheath 151, preferably control the switching of the substance in the second substance layer 132. An outer sheath 152 may further be added to the fibre 10 to provide further structural support and stability in the fibre 10. The outer sheath is preferably formed from non-conductive material and is at least partially transparent to light. Conveniently, the outer sheath 152 is formed from a flexible polymer.

Preferably the first and second substance layers 131, 132 may include the same electro-optic substance or else include different electro-optic substances. However each is selected to have at least one electrically modulatable optical characteristic. The substances in the layers 131, 132 may be switched simultaneously or else be switched independently.

An advantage of having two or more substance layers 131, 132 at varying depths within the fibre 10 is that interesting and aesthetically appealing optical effects can be produced in the appearance of fibre 10 e.g. varying colour effects. In particular, switching one or more substances in layered configurations can give a 3-dimensional 'feel' to the fibre 10.

Alternatively, the central sheath 151 may be omitted, and the one or more further electrode arrays can be structured on the outer surface of the first substance layer 131. In this arrangement, the substance in the first substance layer 131 may be switched either by the electrodes on its outer surface, or the electrodes on the core 11, or by both. The outer electrode arrays are preferably at least partially transparent to light.

It is important to appreciate in the embodiment shown in figure 7b, that the lateral electric fields 18 generated in the fibre 10 are substantially confined to their respective stimulation layers i.e. surface fields, and do not radially pass between the different layers of the fibre 10.

Referring again to figure 7b, spacers 14 may further be added to the fibre in the form of spacer wires in the first and/or second substance layers 131, 132. The spacer wires are preferably entwined around the preceding layers to the substance layers 131, 132 and have a wire diameter of approximately 20-200µm. Alternatively, the spacer wires are in the form of separate substantially circumferential wire rings disposed either randomly, or at predetermined intervals, along the length of the preceding layers. The spacer wires are preferably formed from a non-conductive material to prevent short-circuiting of the electrode arrays.

Alternatively, the spacers 14 may be in the form of substantially spherical spacer beads which are either incorporated within the electro-optic substances 131, 132 or deposited directly onto the outer surfaces of the layers preceding the respective electro-optic substances 131, 132. The diameter of each of the beads 14 is substantially equal to the desired thicknesses of the substance layers 131, 132, which in this example is around 5-50µm. The spacing beads are preferably formed from a non-conductive material to prevent short-circuiting of the electrode arrays.

It is to be understood that other fibre combinations are possible, such as a plurality of substance layers and a plurality of stimulation layers, arranged in various layered configurations within the fibre 10.

Other embodiments are intentionally within the scope of the accompanying claims.

## Claims

1. A method of producing a fibre or filament (10) of a cylindrical shape comprising the steps of:
forming a substrate (11) in the form of an elongated core having a core axis;
coating the substrate directly, or indirectly, with a substance (13) having at least one electrically modulatable optical characteristic; and
applying to the substrate, an electrical stimulation means (12) adapted to produce an electric field arranged to electrically induce a change in the optical characteristic of the substance, thereby changing the visual appearance of the fibre or filament, **characterised in that** the electrical stimulation means is arranged such that the electric field extends in a direction substantially parallel to the core axis or in a direction extending substantially circumferentially about the core axis.

2. The method of claim 1, wherein the substrate is formed from a material adapted to be electrically insulating.

3. The method of claim 1 or claim 2, wherein the forming step includes selecting the mechanical properties of the substrate.

4. The method of any one of the preceding claims, wherein the elongated core is formed to be substantially cylindrical.

5. The method of any preceding claim, further comprising a plurality of associating steps, each associating step associating with the substrate a further electrical stimulation means adapted to produce an electric field extending in a direction substantially parallel to the core axis or in a direction extending substantially circumferentially about the core axis, wherein the electric field electrically induces a change in the optical characteristic of the substance, thereby changing the visual appearance of the fibre or filament.

6. The method of claim 5, wherein the, or each, associating step comprises the steps of arranging the stimulation means such that it forms an elongate stimulation layer extending in a direction substantially parallel to the core axis, and being substantially coaxial with the core.

7. The method of any preceding claim, further comprising a plurality of coating steps, each coating step coating the substrate directly, or indirectly, with a substance having at least one electrically modulatable optical characteristic.

8. The method of claim 7, wherein the, or each, coating step arranges the substance into an elongate substance layer extending in a direction substantially parallel to the core axis and being substantially coaxial with the core.

9. The method of claim 7 or claim 8, further comprising the step of associating each substance layer with at least one stimulation layer.

10. The method of any preceding claim, wherein the coating step comprises depositing the substance by any one of the following techniques: dip coating, spray coating, vapour deposition and sputtering.

11. The method of claim 6, wherein the, or each, stimulation layer comprises an electrode layer, and the, or each, associating step associates an outer surface of the substrate with the electrode layer.

12. The method of claim 6, wherein the, or each, stimulation layer comprises an adhesion layer and an electrode layer, and the associating step associates an outer surface of the substrate with the adhesion layer followed by the electrode layer.

13. The method of claim 12, wherein the, or each, adhesion layer is deposited by sputtering or vapour deposition, and has a thickness in the range of 1 to 5 nm.

14. The method of claim 13, wherein the, or each, adhesion layer is formed from either titanium, molybdenium or chromium, or alloys thereof.

15. The method of claim 8, wherein an outer surface of the substrate is coated by a substance layer and the associating step associates the substance layer with a stimulation layer comprising an electrode layer.

16. A method of producing a flat or ribbon type fibre or filament comprising the steps of:
forming a substrate in the form of an elongated core having a core axis;
coating the substrate directly, or indirectly, with a substance having at least one electrically modulatable optical characteristic; and
applying to the substrate an electrical stimulation means adapted to produce an electric field arranged to electrically induce a change in the optical characteristic of the substance, thereby changing the visual appearance of the filament or fibre, **characterised in that** the electrical stimulation means comprises a first and a second electrode pair disposed in the same off-axis plane, and arranged such that the electric field extends in a direction substantially parallel to the core axis or in a direction extending substantially transversely to the core axis in the off-axis plane.

17. The method of claim 16, wherein the electrical stimulation means further comprises an electrode layer containing the first and second electrode pair, the electrode layer having a plane corresponding to the off-axis plane.

18. The method of claim 11, or claim 12, or claim 17, or any claim dependent thereon, wherein the electrode layer is deposited by sputtering or vapour deposition, and has a thickness in the range of 10 to 400 nm.

19. The method of claim 11, or claim 12, or claim 17, or any claim dependent thereon, wherein the electrode layer is selected to be one of the following metals: gold, silver, platinum and copper, or an alloy containing any of these metals to a substantial degree, such as indium tin oxide, or one of the following at least partially conductive oligomers or polymers: polyaniline, and poly(3,4-ethylenedioxythiophene) (PEDOT) and derivatives thereof.

20. The method of any of claims 11 to 15, or claim 17 to 19,comprising the step of structuring the electrode layer into an array of electrodes, the structuring step following deposition of the electrode layer.

21. The method of claim 20, wherein the electrode layer is structured into a plurality of electrode arrays, each array being electrically independent of the other electrode arrays.

22. The method of claim 20 or claim 21, wherein the step of structuring is selected from any one of the following: atom-by-atom deposition techniques, lithographic methods including soft lithographic methods, X-ray lithography and particle beam techniques.

23. The method of claim 20 or claim 21, wherein the step of structuring comprises the steps of:
coating an outer surface of the electrode layer with a photoresistive substance;
covering the coated outer surface of the electrode layer with an illumination mask, the illumination mask defining the pattern of the electrode array;
irradiating the photoresistive substance through the illumination mask;
and submersing the coated electrode layer in a developing solution;
wherein the exposed sections of the photoresistive substance are removed by an etchant, in the case of a positive resist, to produce the electrode array, and wherein the masked sections of the photoresistive substance are removed by an etchant in the case of a negative resist, to produce the electrode array.

24. The method of claim 23, wherein the photoresistive substance is selected to be a diazonaphtoquinone (DNQ)-based photoresist dispersed in a phenolic matrix resin, and the developing solution is selected to be an aqueous alkaline solution, such as metal hydroxide solutions, for example potassium hydroxide and sodium hydroxide, and non-metal containing solutions, such as tetramethylammonium hydroxide solution.

25. The method of claim 20 or claim 21, wherein the step of structuring comprises the steps of:
inking a flexible stamp having a surface relief pattern defining a pattern of the electrode array;
applying the stamp to an outer surface of the electrode layer to deposit a layer, including a monolayer, of ink in the pattern of the electrode array; and
submersing the electrode layer in an etchant to remove the un-inked sections of the electrode layer.

26. The method of claim 25, comprising the further step of submersing the electrode layer in a further etchant to remove the exposed sections of the adhesion layer, after the electrode has been submersed in the etchant.

27. The method of claim 20 or claim 21, wherein the step of structuring comprises the steps of:
inking, using a first ink, a flexible stamp having a surface relief pattern defining a pattern of the electrode array;
applying the stamp to an outer surface of the electrode layer to deposit a layer of the first ink in the pattern of the electrode array;
depositing a second ink onto the sections of the outer surface of the electrode layer not inked by the first ink; and
submersing the electrode layer in an etchant to remove the sections of the electrode layer inked by the first ink.

28. The method of claim 27, wherein the step of depositing may include any of the following: deposition from solution, deposition from the gas phase and application of a stamp.

29. The method of any one of claims 25 to 28, wherein the applying step includes holding the stamp at rest and rolling the outer surface of the electrode layer across the pattern of the electrode array.

30. The method of claim 11, comprising the step of structuring the electrode layer into an array of electrodes, wherein the step of structuring comprises the steps of:
inking a flexible stamp having a surface relief pattern defining a pattern of the electrode array, the ink consisting of a suspension of a metal precursor;
applying the stamp to an outer surface of the substrate to deposit a layer of ink in the pattern of the electrode array; and
thermally processing the deposited ink to convert the metal precursor held in suspension into a plurality of metal electrodes arranged in the pattern of the electrode array.

31. The method of claim 30, wherein the metal precursor is selected to be one of the following: metal micro- or nano-particles and metal clusters.

32. The method of claim 11, comprising the step of structuring the electrode layer into an array of electrodes, wherein the step of structuring comprises the steps of:
bringing a flexible stamp, having a surface relief pattern, into contact with a support surface bearing a metal layer, wherein the flexible stamp material and support surface material are pre-selected such that the adhesion of the metal to the stamp overcomes the adhesion of the metal to the support surface, so that the metal will selectively adhere only to elevated regions of the surface relief pattern of the stamp; and
applying the prepared stamp to an outer surface of the substrate to deposit the metal layer in the pattern of the electrode array.

33. The method of any one of the preceding claims, wherein the step of forming includes directly coating an outer surface of the substrate with a protective layer.

34. The method of claim 33, wherein the protective layer is deposited by any one of the following techniques: dip coating, spray coating, vapour deposition and sputtering.

35. The method of claim 33 or claim 34, wherein the protective layer is adapted to be resistant to chemical etchants.

36. The method of any preceding claim, further comprising the step of adding spacer means.

37. The method of claim 36, wherein the spacer means comprise a plurality of substantially spherical beads and/or one or more spacer wires extending in a direction substantially parallel to the core axis.

38. The method of claim 37, wherein the substance is adapted to substantially contain the spherical beads.

39. The method of claim 36, wherein the adding step includes attaching the spacer means to an outer surface of the electrode layer.

40. The method of claim 7 or claim 8, or any claim dependent thereon, further comprising the step of covering the substance layer with one or more outer layers.

41. The method of any preceding claim, wherein the substrate is made from a flexible polymer fibre.

42. The method of claim 41, wherein the flexible polymer fibre is selected from any one of polyester, polyamide, acrylic, polypropylene, vinyl-based polymers, wool, silk, flax, hemp, linen, jute, rayon, cellulose acetate and cotton fibres.

43. The method of any preceding claim, wherein the electrically modulatable substance is selected to be an inorganic or organic electro-luminescent material or a liquid crystal material.

44. The method of any preceding claim, wherein the optical characteristic of the substance is selected to be the colour.

## Patentansprüche

1. Verfahren zur Herstellung einer Faser oder eines Fadens (10) von einer zylindrischen Form, welches die folgenden Schritte umfasst:
Formen eines Substrats (11) in der Form eines länglichen Kerns, der eine Kernachse aufweist;
Beschichten des Substrats unmittelbar oder indirekt mit einer Substanz (13), die mindestens eine elektrisch modulierbare optische Eigenschaft aufweist; und
Aufbringen auf das Substrat eines elektrischen Stimulationsmittels (12), das in der Lage ist, ein elektrisches Feld zu erzeugen, das so beschaffen ist, dass es elektrisch eine Änderung in der optischen Eigenschaft der Substanz hervorruft, wodurch es das visuelle Erscheinungsbild der Faser oder des Fadens verändert, **dadurch gekennzeichnet, dass** das elektrische Stimulationsmittel so beschaffen ist, dass sich das elektrische Feld in einer Richtung erstreckt, die im Wesentlichen parallel zur Kernachse ist, oder in einer Richtung, die sich im Wesentlichen in Umfangsrichtung um die Kernachse erstreckt.

2. Verfahren nach Anspruch 1, wobei das Substrat aus einem Material geformt wird, dass so beschaffen ist, dass es elektrisch isolierend ist.

3. Verfahren nach Anspruch 1 oder Anspruch 2, wobei der Schritt des Formens ein Wählen der mechanischen Eigenschaften des Substrats beinhaltet.

4. Verfahren nach einem der vorhergehenden Ansprüche, wobei der längliche Kern so geformt wird, dass er im Wesentlichen zylindrisch ist.

5. Verfahren nach einem der vorhergehenden Ansprüche, welches ferner mehrere Verbindungsschritte umfasst, wobei jeder Verbindungsschritt mit dem Substrat ein weiteres elektrisches Stimulationsmittel verbindet, das so beschaffen ist, dass es ein elektrisches Feld erzeugt, das sich in einer Richtung erstreckt, die im Wesentlichen parallel zur Kernachse ist, oder in einer Richtung, die sich im Wesentlichen in Umfangsrichtung um die Kernachse erstreckt, wobei des elektrische Feld elektrisch eine Änderung in der optischen Eigenschaft der Substanz hervorruft, wodurch es das visuelle Erscheinungsbild der Faser oder des Fadens verändert.

6. Verfahren nach Anspruch 5, wobei der oder jeder Verbindungsschritt die Schritte des Anordnens des Stimulationsmittels umfasst, derart, dass es eine langgestreckte Stimulationsschicht bildet, die sich in einer im Wesentlichen zur Kernachse parallelen Richtung erstreckt und im Wesentlichen koaxial zum Kern ist.

7. Verfahren nach einem der vorhergehenden Ansprüche, welches ferner mehrere Beschichtungsschritte umfasst, wobei jeder Beschichtungsschritt das Substrat unmittelbar oder indirekt mit einer Substanz beschichtet, die mindestens eine elektrisch modulierbare optische Eigenschaft aufweist.

8. Verfahren nach Anspruch 7, wobei der oder jeder Beschichtungsschritt die Substanz in einer langgestreckten Substanzschicht anordnet, die sich in einer im Wesentlichen zur Kernachse parallelen Richtung erstreckt und im Wesentlichen koaxial zum Kern ist.

9. Verfahren nach Anspruch 7 oder Anspruch 8, welches ferner den Schritt des Verbindens jeder Substanzschicht mit mindestens einer Stimulationsschicht umfasst.

10. Verfahren nach einem der vorhergehenden Ansprüche, wobei der Beschichtungsschritt das Aufbringen der Substanz durch irgendeines der folgenden Verfahren umfasst: Tauchbeschichtung, Spritzbeschichtung, Aufdampfung und Kathodenzerstäubung (Sputtering).

11. Verfahren nach Anspruch 6, wobei die oder jede Stimulationsschicht eine Elektrodenschicht umfasst und der oder jeder Verbindungsschritt eine Außenfläche des Substrats mit der Elektrodenschicht verbindet.

12. Verfahren nach Anspruch 6, wobei die oder jede Stimulationsschicht eine Haftschicht und eine Elektrodenschicht umfasst und der Verbindungsschritt eine Außenfläche des Substrats mit der Adhäsionsschicht verbindet, auf welche die Elektrodenschicht folgt.

13. Verfahren nach Anspruch 12, wobei die oder jede Haftschicht durch Kathodenzerstäubung (Sputtering) oder Aufdampfung aufgebracht wird und eine Dicke im Bereich von 1 bis 5 nm aufweist.

14. Verfahren nach Anspruch 13, wobei die oder jede Haftschicht entweder aus Titan oder Molybdän oder Chrom oder Legierungen davon hergestellt wird.

15. Verfahren nach Anspruch 8, wobei eine Außenfläche des Substrats mit einer Substanzschicht beschichtet wird und der Verbindungsschritt die Substanzschicht mit einer Stimulationsschicht verbindet, die eine Elektrodenschicht umfasst.

16. Verfahren zur Herstellung einer flachen oder bandförmigen Faser oder eines ebensolchen Fadens, welches die folgenden Schritte umfasst:
Formen eines Substrats in der Form eines länglichen Kerns, der eine Kernachse aufweist;
Beschichten des Substrats unmittelbar oder indirekt mit einer Substanz, die mindestens eine elektrisch modulierbare optische Eigenschaft aufweist; und
Aufbringen auf das Substrat eines elektrischen Stimulationsmittels, das in der Lage ist, ein elektrisches Feld zu erzeugen, das so beschaffen ist, dass es elektrisch eine Änderung in der optischen Eigenschaft der Substanz hervorruft, wodurch es das visuelle Erscheinungsbild der Faser oder des Fadens verändert, **dadurch gekennzeichnet, dass** das elektrische Stimulationsmittel ein erstes und ein zweites Elektrodenpaar umfasst, die in derselben nicht durch die Achse verlaufenden Ebene angeordnet sind und so beschaffen sind, dass sich das elektrische Feld in einer Richtung, die im Wesentlichen parallel zur Kernachse ist, oder in einer Richtung, die sich im Wesentlichen quer zur Kernachse erstreckt, in der nicht durch die Achse verlaufenden Ebene erstreckt.

17. Verfahren nach Anspruch 16, wobei das elektrische Stimulationsmittel ferner eine Elektrodenschicht umfasst, die das erste und zweite Elektrodenpaar enthält, wobei die Elektrodenschicht eine Ebene aufweist, die der nicht durch die Achse verlaufenden Ebene entspricht.

18. Verfahren nach Anspruch 11 oder Anspruch 12 oder Anspruch 17 oder einem davon abhängigen Anspruch, wobei die Elektrodenschicht durch Kathodenzerstäubung (Sputtering) oder Aufdampfung aufgebracht wird und eine Dicke im Bereich von 10 bis 400 nm aufweist.

19. Verfahren nach Anspruch 11 oder Anspruch 12 oder Anspruch 17 oder einem davon abhängigen Anspruch, wobei die Elektrodenschicht so gewählt wird, dass sie aus einem der folgenden Metalle besteht: Gold, Silber, Platin und Kupfer, oder aus einer Legierung, die irgendeines dieser Metalle in einem wesentlichen Anteil enthält, wie etwa Indiumzinnoxid, oder aus einem der folgenden mindestens teilweise leitenden Oligomere oder Polymere: Polyanilin und Poly(3,4-ethylendioxythiophen) (PEDOT) und Derivate davon.

20. Verfahren nach einem der Ansprüche 11 bis 15 oder Anspruch 17 bis 19, welches den Schritt des Strukturierens der Elektrodenschicht in ein Array von Elektroden umfasst, wobei der Strukturierungsschritt der Aufbringung der Elektrodenschicht folgt.

21. Verfahren nach Anspruch 20, wobei die Elektrodenschicht in mehrere Elektrodenarrays strukturiert ist, wobei jedes Array elektrisch unabhängig von den anderen Elektrodenarrays ist.

22. Verfahren nach Anspruch 20 oder Anspruch 21, wobei der Schritt des Strukturierens aus einem der folgenden gewählt wird: Verfahren der Atomabscheidung, lithographische Verfahren einschließlich weichlithographischer Verfahren, Röntgenlithographie und Teilchenstrahlverfahren.

23. Verfahren nach Anspruch 20 oder Anspruch 21, wobei der Schritt des Strukturierens die folgenden Schritte umfasst:
Beschichten einer Außenfläche der Elektrodenschicht mit einer photoresistiven Substanz;
Abdecken der beschichteten Außenfläche der Elektrodenschicht mit einer Belichtungsmaske, wobei die Belichtungsmaske das Muster des Elektrodenarrays definiert;
Bestrahlen der photoresistiven Substanz durch die Belichtungsmaske hindurch;
und Eintauchen der beschichteten Elektrodenschicht in eine Entwicklerlösung;
wobei im Falle eines Positivresists die freiliegenden Abschnitte der photoresistiven Substanz durch ein Ätzmittel entfernt werden, um das Elektrodenarray herzustellen, und wobei im Falle eines Negativresists die abgedeckten Abschnitte der photoresistiven Substanz durch ein Ätzmittel entfernt werden, um das Elektrodenarray herzustellen.

24. Verfahren nach Anspruch 23, wobei die photoresistive Substanz so gewählt wird, dass sie ein Photoresist auf der Basis von Diazonaphthoquinon (DNQ) ist, der in einer Phenolharzmatrix dispergiert ist, und die Entwicklerlösung so gewählt wird, dass sie eine wässrige Lauge ist, wie etwa Metallhydroxidlösungen, zum Beispiel Kaliumhydroxid und Natriumhydroxid, und Nichtmetall enthaltende Lösungen, wie etwa Tetramethylammoniumhydroxid-Lösung.

25. Verfahren nach Anspruch 20 oder Anspruch 21, wobei der Schritt des Strukturierens die folgenden Schritte umfasst:
Einfärben eines flexiblen Stempels, der ein Oberflächenreliefmuster aufweist, das ein Muster des Elektrodenarrays definiert;
Anlegen des Stempels an eine Außenfläche der Elektrodenschicht, um eine Schicht, die eine Monoschicht beinhaltet, von Farbe in dem Muster des Elektrodenarrays aufzubringen; und
Eintauchen der Elektrodenschicht in ein Ätzmittel, um die nicht eingefärbten Abschnitte der Elektrodenschicht zu entfernen.

26. Verfahren nach Anspruch 25, welches den weiteren Schritt des Eintauchens der Elektrodenschicht in ein weiteres Ätzmittel umfasst, um die freiliegenden Abschnitte der Haftschicht zu entfernen, nachdem die Elektrode in das Ätzmittel eingetaucht worden ist.

27. Verfahren nach Anspruch 20 oder Anspruch 21, wobei der Schritt des Strukturierens die folgenden Schritte umfasst:
Einfärben eines flexiblen Stempels, der ein Oberflächenreliefmuster aufweist, das ein Muster des Elektrodenarrays definiert, unter Verwendung einer ersten Farbe;
Anlegen des Stempels an eine Außenfläche der Elektrodenschicht, um eine Schicht der ersten Farbe in dem Muster des Elektrodenarrays aufzubringen;
Aufbringen einer zweiten Farbe auf die Abschnitte der Außenfläche der Elektrodenschicht, die nicht durch die erste Farbe eingefärbt wurden; und
Eintauchen der Elektrodenschicht in ein Ätzmittel, um die durch die erste Farbe eingefärbten Abschnitte der Elektrodenschicht zu entfernen.

28. Verfahren nach Anspruch 27, wobei der Schritt des Aufbringens irgendeinen der folgenden Schritte beinhalten kann: Abscheidung aus einer Lösung, Abscheidung aus der Gasphase und Anlegen eines Stempels.

29. Verfahren nach einem der Ansprüche 25 bis 28, wobei der Schritt des Anlegens beinhaltet, den Stempel ruhig zu halten und die Außenfläche der Elektrodenschicht über das Muster des Elektrodenarrays zu rollen.

30. Verfahren nach Anspruch 11, welches den Schritt des Strukturierens der Elektrodenschicht in ein Array von Elektroden umfasst, wobei der Schritt des Strukturierens die folgenden Schritte umfasst:
Einfärben eines flexiblen Stempels, der ein Oberflächenreliefmuster aufweist, das ein Muster des Elektrodenarrays definiert, wobei die Farbe aus einer Suspension eines Metallvorläufers besteht;
Anlegen des Stempels an eine Außenfläche des Substrats, um eine Schicht von Farbe in dem Muster des Elektrodenarrays aufzubringen; und
Durchführen einer Wärmebehandlung der aufgebrachten Farbe, um den in Suspension gehaltenen Metallvorläufer in mehrere Metallelektroden umzuwandeln, die in dem Muster des Elektrodenarrays angeordnet sind.

31. Verfahren nach Anspruch 30, wobei der Metallvorläufer so gewählt wird, dass er eines von Folgendem ist: Metallmikro- oder Nanopartikel und Metallcluster.

32. Verfahren nach Anspruch 11, welches den Schritt des Strukturierens der Elektrodenschicht in ein Array von Elektroden umfasst, wobei der Schritt des Strukturierens die folgenden Schritte umfasst:
Bringen eines flexiblen Stempels, der ein Oberflächenreliefmuster aufweist, in Kontakt mit einer eine Metallschicht tragenden Stützfläche, wobei das Material des flexiblen Stempels und das Material der Stützfläche derart vorgewählt sind, dass die Haftung des Metalls an dem Stempel die Haftung des Metalls an der Stützfläche überwindet, so dass das Metall selektiv nur an erhöhten Bereichen des Oberflächenreliefmusters des Stempels haftet; und
Anlegen des vorbereiteten Stempels an eine Außenfläche des Substrats, um die Metallschicht in dem Muster des Elektrodenarrays aufzubringen.

33. Verfahren nach einem der vorhergehenden Ansprüche, wobei der Schritt des Formens ein unmittelbares Beschichten einer Außenfläche des Substrats mit einer Schutzschicht beinhaltet.

34. Verfahren nach Anspruch 33, wobei die Schutzschicht durch irgendeines der folgenden Verfahren aufgebracht wird: Tauchbeschichtung, Spritzbeschichtung, Aufdampfung und Kathodenzerstäubung (Sputtering).

35. Verfahren nach Anspruch 33 oder Anspruch 34, wobei die Schutzschicht so beschaffen ist, dass sie gegen chemische Ätzmittel beständig ist.

36. Verfahren nach einem der vorhergehenden Ansprüche, das ferner den Schritt des zusätzlichen Anbringens von Distanzmitteln umfasst.

37. Verfahren nach Anspruch 36, wobei die Distanzmittel mehrere im Wesentlichen kugelförmige Perlen und/oder einen oder mehrere Distanzdrähte, die sich in einer Richtung im Wesentlichen parallel zur Kernachse erstrecken, umfassen.

38. Verfahren nach Anspruch 37, wobei die Substanz so beschaffen ist, dass sie im Wesentlichen die kugelförmigen Perlen enthält.

39. Verfahren nach Anspruch 36, wobei der Schritt des zusätzlichen Anbringens das Befestigen der Distanzmittel an einer Außenfläche der Elektrodenschicht beinhaltet.

40. Verfahren nach Anspruch 7 oder Anspruch 8 oder irgendeinem davon abhängigen Anspruch, welches ferner den Schritt des Bedeckens der Substanzschicht mit einer oder mehreren äußeren Schichten umfasst.

41. Verfahren nach einem der vorhergehenden Ansprüche, wobei das Substrat aus einer flexiblen Polymerfaser hergestellt wird.

42. Verfahren nach Anspruch 41, wobei die flexible Polymerfaser als irgendeine von folgenden gewählt ist: Polyester, Polyamid, Acryl, Polypropylen, Polymere auf Vinylbasis, Wolle, Seide, Flachs, Hanf, Leinen, Jute, Kunstseide, Celluloseacetat und Baumwollfasern.

43. Verfahren nach einem der vorhergehenden Ansprüche, wobei die elektrisch modulierbare Substanz so gewählt ist, dass sie ein anorganisches oder organisches elektrolumineszentes Material oder ein Flüssigkristallmaterial ist.

44. Verfahren nach einem der vorhergehenden Ansprüche, wobei als die optische Eigenschaft der Substanz die Farbe gewählt ist.

## Revendications

1. Procédé de production d'une fibre ou d'un filament (10) de forme cylindrique, comprenant les étapes de :
former un substrat (11) sous forme d'un noyau allongé qui a un axe de noyau;
revêtir, directement ou indirectement, le substrat d'une substance (13) qui a au moins une caractéristique optique électriquement modulable; et
appliquer au substrat un moyen de stimulation électrique (12) à même de produire un champ électrique, disposé pour induire électriquement une modification de la caractéristique optique de la substance, modifiant par là l'apparence visuelle de la fibre ou filament, **caractérisé en ce que** le moyen de stimulation électrique est disposé de façon que le champ électrique s'étende dans une direction essentiellement parallèle à l'axe du noyau ou dans une direction qui s'étend essentiellement circonférentiellement autour de l'axe du noyau.

2. Procédé selon la revendication 1, dans lequel le substrat est formé à partir d'un matériau adapté pour être électriquement isolant.

3. Procédé selon la revendication 1 ou la revendication 2, dans lequel l'étape de formage comprend le fait de sélectionner les propriétés mécaniques du substrat.

4. Procédé selon une quelconque des revendications précédentes, dans lequel le noyau allongé est formé pour être essentiellement cylindrique.

5. Procédé selon une quelconque des revendications précédentes, comprenant en outre une pluralité d'étapes associantes, chaque étape associante associant au substrat un moyen de stimulation électrique supplémentaire à même de produire un champ électrique qui s'étend dans une direction essentiellement parallèle à l'axe du noyau ou dans une direction qui s'étend de façon essentiellement circonférentielle autour de l'axe du noyau, où le champ électrique induit électriquement une modification de la caractéristique optique de la substance, de ce fait modifiant l'apparence visuelle de la fibre ou du filament.

6. Procédé selon la revendication 5, dans lequel la ou chaque étape associante comprend les étapes de disposer le moyen de stimulation de façon qu'il forme une couche de stimulation allongée qui s'étend dans une direction essentiellement parallèle à l'axe du noyau, et qui est essentiellement coaxiale avec le noyau.

7. Procédé selon une quelconque des revendications précédentes, comprenant en outre une pluralité d'étapes de revêtement, chaque étape de revêtement recouvrant la substance directement ou indirectement avec une substance qui a au moins une caractéristique optique électriquement modulable.

8. Procédé selon la revendication 7, dans lequel la ou chaque étape de revêtement dispose la substance en une couche de substance allongée qui s'étend dans une direction essentiellement parallèle à l'axe du noyau, et qui est essentiellement coaxiale avec le noyau.

9. Procédé selon la revendication 7 ou la revendication 8, comprenant en outre l'étape d'associer chaque couche de substance avec au moins une couche de stimulation.

10. Procédé selon une quelconque des revendications précédentes, où l'étape de revêtement comprend le fait de déposer la substance par une quelconque des techniques suivantes: revêtement par trempage, revêtement par pulvérisation, dépôt en phase vapeur et pulvérisation cathodique.

11. Procédé selon la revendication 6, dans lequel la ou chaque couche de stimulation comprend une couche formant électrode, et la ou chaque étape associante associe une surface extérieure du substrat à la couche formant électrode.

12. Procédé selon la revendication 6, dans lequel la ou chaque couche de stimulation comprend une couche d'adhérence et une couche formant électrode, et dans lequel l'étape associante associe une surface extérieure du substrat à la couche d'adhérence suivie de la couche formant électrode.

13. Procédé selon la revendication 12, dans lequel la ou chaque couche d'adhérence est déposée par pulvérisation cathodique ou dépôt en phase vapeur, et a une épaisseur dans la plage de 1 à 5 nm.

14. Procédé selon la revendication 13, dans lequel la ou chaque couche d'adhérence est formée de titane, de molybdène ou de chrome ou d'alliages de ceux-ci.

15. Procédé selon la revendication 8, dans lequel une surface extérieure du substrat est recouverte d'une couche de substance, et dans lequel l'étape associante associe la couche de substance à une couche de stimulation qui comprend une couche formant électrode.

16. Procédé de production d'une fibre ou d'un filament plat ou de type ruban, comprenant les étapes de :
former un substrat sous forme d'un noyau allongé qui a un axe de noyau;
revêtir, directement ou indirectement, le substrat d'une substance qui a au moins une caractéristique optique électriquement modulable; et
appliquer au substrat un moyen de stimulation électrique à même de produire un champ électrique, disposé pour induire électriquement une modification de la caractéristique optique de la substance, modifiant par là l'apparence visuelle de la fibre ou filament, **caractérisé en ce que** le moyen de stimulation électrique comprend une première et une deuxième paire d'électrodes disposées dans le même plan en dehors de l'axe, et disposé de façon que le champ électrique s'étende dans une direction essentiellement parallèle à l'axe du noyau ou dans une direction qui s'étend essentiellement transversalement à l'axe du noyau dans le plan en-dehors de l'axe.

17. Procédé selon la revendication 16, dans lequel le moyen de stimulation électrique comprend en outre une couche formant électrode contenant la première et la deuxième paire d'électrodes, la couche formant électrode ayant un plan qui correspond au plan en dehors de l'axe.

18. Procédé selon la revendication 11, la revendication 12 ou la revendication 17, ou toute revendication qui dépend de celles-ci, dans lequel la couche formant électrode est déposée par pulvérisation cathodique ou dépôt en phase vapeur, et a une épaisseur dans la plage de 10 à 400 nm.

19. Procédé selon la revendication 11, la revendication 12 ou la revendication 17, ou toute revendication dépendante de celles-ci, où la couche formant électrode est sélectionnée pour être d'un des métaux suivants : l'or, l'argent, le platine et le cuivre, ou un alliage contenant n'importe lequel de ces métaux dans une proportion importante, tel que l'oxyde d'étain indium, ou un des oligomères ou polymères au moins partiellement conducteur suivants : polyaniline et poly(3,4-éthylènedioxythiophène) (PEDOT) et des dérivés de ceux-ci.

20. Procédé selon une quelconque des revendications 11 à 15, ou des revendications 17 à 19, comprenant l'étape de structurer la couche formant électrode en une matrice d'électrodes, l'étape structurante suivant le dépôt de la couche formant électrode.

21. Procédé selon la revendication 20, dans lequel la couche formant électrode est structurée en une pluralité de matrices d'électrodes, chaque matrice étant électriquement indépendante des autres matrices d'électrodes.

22. Procédé selon la revendication 20 ou la revendication 21, dans lequel l'étape de structurer est sélectionnée parmi un quelconque des procédés suivants : techniques de dépôt atome par atome, procédés lithographiques comprenant les procédés de lithographie molle, la lithographie par rayons X et les techniques à faisceau de particules.

23. Procédé selon la revendication 20 ou la revendication 21, dans lequel l'étape de structurer comprend les étapes de :
revêtir la surface extérieure de la couche formant électrode avec une substance photosensible;
recouvrir la surface extérieure revêtue de la couche formant électrode avec un masque d'éclairement, le masque d'éclairement définissant le motif de la matrice d'électrodes;
irradier la substance photosensible au travers du masque d'éclairement;
et tremper la couche formant électrode revêtue dans une solution de développement;
où, pour produire la matrice d'électrodes, dans le cas d'une substance photosensible positive, les sections exposées de la substance photosensible sont enlevées par un réactif d'attaque chimique, et, dans le cas d'une substance photosensible négative, les sections masquées de la substance photosensible sont enlevées par un réactif d'attaque chimique.

24. Procédé selon la revendication 23, dans lequel la substance photosensible est sélectionnée pour être une substance photosensible à base de diazonaphtoquinone (DNQ) dispersée dans une résine à matrice phénolique, et la solution de développement est sélectionnée pour être une solution alcaline aqueuse, telle que des solutions d'hydroxyde métallique, par exemple de l'hydroxyde de potassium et de l'hydroxyde de sodium, et des solutions contenant des éléments non métalliques, telles qu'une solution d'hydroxyde de tétraméthylammonium.

25. Procédé selon la revendication 20 ou la revendication 21, dans lequel l'étape de structurer comprend les étapes de :
encrer un tampon flexible qui a un motif de relief de surface définissant un motif de la matrice d'électrodes;
appliquer le tampon sur une surface extérieure de la couche formant électrode pour déposer une couche d'encre, y compris une monocouche, dans le motif de la matrice d'électrodes; et
tremper la couche formant électrode dans un réactif d'attaque chimique pour enlever les sections non encrées de la couche formant électrode.

26. Procédé selon la revendication 25, comprenant l'étape supplémentaire de tremper la couche formant électrode dans un autre réactif d'attaque chimique pour enlever les sections exposées de la couche d'adhérence après que l'électrode ait été trempée dans le réactif d'attaque chimique.

27. Procédé selon la revendication 20 ou la revendication 21, dans lequel l'étape de structurer comprend les étapes de :
encrer, en utilisant une première encre, un tampon flexible qui a un motif de relief de surface définissant un motif de la matrice d'électrodes;
appliquer le tampon sur une surface extérieure de la couche formant électrode pour déposer une couche de la première encre dans le motif de la matrice d'électrodes;
déposer une deuxième encre sur les sections de la surface extérieure de la couche formant électrode qui ne sont pas encrées par la première encre; et
tremper la couche formant électrode dans un réactif d'attaque chimique pour enlever les sections de la couche formant électrode qui sont encrées par la première encre.

28. Procédé selon la revendication 27, où l'étape de déposer peut comprendre un quelconque des éléments suivants : dépôt à partir d'une solution, dépôt à partir d'une phase gazeuse et application d'un tampon.

29. Procédé selon une quelconque des revendications 25 à 28, où l'étape d'appliquer comprend le fait de maintenir le tampon immobile et de faire rouler la surface extérieure de la couche formant électrode d'un côté à l'autre du motif de la matrice d'électrodes.

30. Procédé selon la revendication 11, comprenant l'étape de structurer la couche formant électrode en une matrice d'électrodes, où l'étape de structurer comprend les étapes de :
encrer un tampon flexible qui a un motif de relief de surface définissant un motif de la matrice d'électrodes, l'encre étant composée d'une suspension d'un précurseur métallique;
appliquer le tampon sur une surface extérieure du substrat pour déposer une couche d'encre dans le motif de la matrice d'électrodes; et
traiter thermiquement l'encre déposée pour convertir le précurseur métallique maintenu en suspension en une pluralité d'électrodes métalliques disposées dans le motif de la matrice d'électrodes.

31. Procédé selon la revendication 30, dans lequel le précurseur métallique est sélectionné pour être un des suivants : micro- ou nanoparticules de métal et agrégats de métal.

32. Procédé selon la revendication 11, comprenant l'étape de structurer la couche formant électrode en une matrice d'électrodes, où l'étape de structurer comprend les étapes de :
mettre un tampon flexible qui a un motif de relief de surface en contact avec une surface support portant une couche de métal, où le matériau de tampon flexible et le matériau de surface support sont présélectionnés de façon que l'adhérence du métal au tampon surmonte l'adhérence du métal à la surface support, de façon que le métal adhère de façon sélective seulement aux régions surélevées du motif de surface en relief du tampon; et
appliquer le tampon préparé sur une surface extérieure du substrat pour déposer la couche de métal dans le motif de la matrice d'électrodes.

33. Procédé selon une quelconque des revendications précédentes, où l'étape de former comprend le revêtement direct d'une surface extérieure du substrat avec une couche protectrice.

34. Procédé selon la revendication 33, dans lequel la couche protectrice est déposée par une quelconque des techniques suivantes : revêtement par trempage, revêtement par pulvérisation, dépôt en phase vapeur et pulvérisation cathodique.

35. Procédé selon la revendication 33 ou la revendication 34, dans lequel la couche protectrice est à même d'être résistante à des réactifs d'attaque chimique.

36. Procédé selon une quelconque des revendications précédentes, comprenant en outre l'étape d'ajouter un moyen d'espacement.

37. Procédé selon la revendication 36, dans lequel le moyen d'espacement comprend une pluralité de billes essentiellement sphériques et / ou un ou plusieurs fils d'espacement qui s'étendent dans une direction essentiellement parallèle à l'axe du noyau.

38. Procédé selon la revendication 37, dans lequel la substance est à même essentiellement de contenir les billes sphériques.

39. Procédé selon la revendication 36, où l'étape d'ajouter comprend le fait d'attacher le moyen d'espacement à une surface extérieure de la couche formant électrode.

40. Procédé selon la revendication 7 ou la revendication 8 ou toute revendication dépendante de celles-ci, comprenant en outre l'étape de couvrir la couche de substance avec une ou plusieurs couches extérieures.

41. Procédé selon une quelconque des revendications précédentes, où le substrat est fait à partir d'une fibre polymère flexible.

42. Procédé selon la revendication 41, où la fibre polymère flexible est sélectionnée parmi une quelconque des fibres de polyester, polyamide, acrylique, polypropylène, polymères à base de vinyle, laine, soie, lin, chanvre, jute, rayonne, acétate de cellulose et coton

43. Procédé selon une quelconque des revendications précédentes, où la substance électriquement modulable est choisie pour être un matériau électroluminescent organique ou inorganique ou un matériau cristal liquide.

44. Procédé selon une quelconque des revendications précédentes, où la caractéristique optique de la substance est sélectionnée pour être la couleur.
